# EUROPEAN PATENT APPLICATION

(11) **EP 1 227 450 A2**
(43) Date of publication of application: **31.07.2002**
(21) Application number: 02396006.5
(22) Date of filing: 28.01.2002
(51) Int. Cl.: G07F 19/00, G07F 7/10

(54) **Method and arrangement for offering a service via information network**

(30) Priority: 29.01.2001 FI 20010168
(71) Applicant: Suomen Posti Oy, 00101 Helsinki (FI)
(72) Inventor: Gefwert, Boris, 02360 Espoo (FI); Pesonen, Juha-Tapio, 02320 Espoo (FI)
(74) Representative: Kupiainen, Juhani Kalervo

(57) **Abstract**

The invention relates to a method and arrangement (300) for offering a service via an open (202) and a closed (206) network. In particular the invention relates to the transfer of identification information associated with a transaction between the different parties and systems involved in the transaction. An idea of the invention is that data associated with a transaction are transferred to a service user's (223) closed-network terminal (207) for accepting a service or identifying the service user. Acceptance of a service or user identification can be accomplished by entering a code at the service user's terminal (207). Another idea of the invention is a reliable identification and authentication of the parties (223, 224) involved in a transaction by a service provider (203, 205) or a reliable third party.

## Description

The invention relates to a method and arrangement for offering a service via an information network. In particular the invention relates to the transfer of identification information associated with a transaction between the different parties and systems involved in the transaction.

Supply and demand for new products and services have increased dramatically in information networks such as the internet and mobile networks. One example of such services involves the use of various paid messages as well as services and products, available according to the needs of the users, for several different types of terminal such as e.g. personal computers (PC), personal digital assistants (PDA), mobile phones and digital TVs. In addition, open networks nowadays provide more often than before various online forms or documents or other similar services the use of which requires user identification and authentication or authorization.

Various methods, such as e.g. the use of user IDs and passwords, are known for registering, identification and authentication in the internet and similar open networks as well as for enhancing the security related to the sending, forwarding and reception of messages and documents. Passwords may be fixed or variable. Often, however, it is difficult to remember the numerous or complex passwords as nearly every service, in which user identification or authentication is necessary, requires that the user has an identifying name and password. It is not always possible, and indeed not even sensible from the information security point of view, that the user ID and password are the same in all systems. Moreover, the systems often generate arbitrary user names and passwords, and usually the passwords need to be changed at regular intervals, whereby remembering the passwords becomes even more difficult.

From US patents 5,220,501 and 5,870,724 arrangements are known for handling services that involve secure transactions. Arrangements according to said publications rely on user-specific passwords or user identification codes in systems that establish a connection directly between e.g. a bank and a terminal, typically via an ATM network. Publication WO 0031608 discloses an arrangement in which an identification code of a portable terminal can be used for identifying a user as he logs on in a computer or system, for example. In addition, EP publication 0 960 402 discloses an arrangement for using a wireless terminal, such as a mobile phone, in banking and bill payment services, where the terminal has a special so-called mobile wallet phone mode.

Arrangements according to the prior art, however, involve some drawbacks. Typically these arrangements are specific to a certain bank or banking service. Systems according to said arrangements usually include a special keyboard and display unit intended especially for banking services while broader application of the equipment according to the systems is usually impossible. For example, forms used in information networks cannot be generally electronically signed because of a lack of a smart card and reader. Other problems with known methods include the absence of an identification, authentication and payment method linking the services of telephone network operators, service providers and other operators and network technologies. Network services require efficient and reliable methods and structures of payment, identification and authentication and sensible product, service and pricing concepts. The operating principles and service practices of known arrangements do not support the development of practical and large-scale electronic services for the needs of consumers, companies and authorities.

An object of the invention is to provide a solution for offering a service in such a manner that above-mentioned drawbacks associated with the prior art can be reduced. The invention aims to solve the question of how information related to a purchase transaction or service can be secured by the different parties and how the users of a service or the parties can be identified and authenticated unambiguously.

The objects of the invention are achieved by sending a verification request to the terminal of the user of a service, which the user can accept by entering a code at his terminal. The code may be e.g. a four-digit PIN number or, alternatively, it may also contain letters or special characters.

The method according to the invention for offering a service in an information network is characterized in that information related to a service transaction is transferred in an open network, said information is accepted, and identification of the acceptor of the information is realized through authentication performed in a closed network.

The arrangement according to the invention for offering a service in an information network is characterized in that the arrangement comprises an open and a closed information network, a means for transferring information related to a service transaction in the open network, a means for accepting said information, and a means for identifying the acceptor of the information through authentication performed in the closed network.

Advantageous embodiments of the invention are presented in the dependent claims.

The invention has significant advantages over prior-art arrangements. The method according to the invention enables identification and strong authentication of a user of a service e.g. by means of the user's terminal such as a mobile phone. The invention enables reliable transfer of information or verification requests e.g. related to a transaction or service offered in an open network, to a service user's terminal in a closed network for verification, user identification or acceptance of information.

The invention also enables reliable identification of the both parties involved in the transaction, authentication of the documents transferred and verification of their originality, verification of information security and integrity, indisputableness of an event or a transaction, and registering of the time of occurrence of the transaction.

The invention can also be used to provide notary services such as time stamps and archiving. Notary services are required e.g. in the delivery, distribution and storing of electronic messages and official documents. For these functions a so-called reliable third party (RTP) is needed, which is independent of all the other parties involved in the service chain and senders and receivers of electronic forms. The RTP may be located at some point of the service chain between the parties involved in the transaction, where it provides verification services according to its role, such as identification and authentication of parties.

In this patent application, e.g. the following concepts are used:
- "Customer" is the user of the method according to the invention and a party to a commercial transaction who purchases or buys a product or a service e.g. traditionally from a seller or, alternatively, in an information network or via an information network.
- "Service provider in an open network" may be e.g. an internet operator providing information network services. In addition, a service provider in an open network may provide electronic online forms e.g. through information networks and identify the different parties as well as convey information between them.
- "Open-network terminal" may be e.g. a computer or workstation, PDA, mobile phone, digital TV, or a similar system provided with suitable memory units, communications facilities and a processor. An open-network terminal may be connected to the system of a service provider in an open network either directly via the open network or, alternatively, via a closed network e.g. if the terminal is coupled with a wireless terminal such as mobile phone.
- "Digital signature" is based on a so-called public key method to identify and authenticate the sender and receiver of a message, guarantee the indisputableness of the transaction and ensure the security and integrity of the data.
- "Reliable third party" links the service provider and user by offering verification services according to its role, such as identification and authentication of parties.
- "Sender" sends a message in electronic form to a recipient.
- "Seller" is the user of the method according to the invention, who sells a product or service either conventionally at a place of trade or, alternatively, in an information network or via an information network.
- "User of service" is e.g. a customer, seller, private consumer or citizen, company or organization, authority or administrative organ that uses the method according to the invention or said services of a service provider.
- "Message or request" may comprise in electronic form a general identification code or part of a code, a recipient's name or network or directory address, and the name and address and e-mail address of a network service provider, for example. Furthermore, it may be e.g. a complete document, e-mail message with attachment, standalone publication, product or service, notice or announcement, remark or reminder, alarm or error message, request for a service or quotation, prompt or guidance, notification or advertisement, permission or summons. What is common to all these is that they are delivered, published or conveyed to the recipient in electronic form.
- "Service provider in a closed network" may be e.g. a mobile telephone operator that conveys messages or information in the internet and wireless networks, for example, and may identify the different parties and convey information between parties.
- "Closed-network terminal" may be e.g. a PDA, mobile phone or a similar device. In particular the terminal may be a mobile phone operating in a wireless network and equipped with a suitable SIM card (Subscriber Identity Module).
- "Electronic form" is a fixed-format form produced, transferred or delivered, displayed or filled using an electronic means, often a copy of an original paper form.
- "Authentication" means verifying the authenticity of user identification.
- "Identification" refers to an event in which the user gives his identity or identification data to a system. Alternatively, the identifying data may be read from a message sent by the user.
- "Verification" includes the identification data of the parties or a service, a reference to user rights, encryption keys for messages and secret keys required by digital signature and the verifier's data.
- "Recipient" is one that receives a message sent to him electronically.
- "Online form" refers to an advanced intelligent electronic form which, in addition to conforming to a certain fixed format, also includes some functional properties such as pre-filling, help functions, and an interface to an application or directly to a database, and which usually has no direct equivalence with a paper form. An online form could also be likened to a traditional display screen of an application. One criterion for an intelligent form could be the possibility of information retrieval or filling as well as digital signature.

As a first example, let us consider the transfer of transaction data related to a service or commercial transaction in an open network. The parties, or the users of service, are in this case the customer and the seller. In this example, the selling party offers products or service at his place of trade. The customer collects items in his shopping basket from which the seller transfers the transaction data to his cash and billing system. In the payment transaction, the transaction data are sent from the seller's billing system via an information network, such as the internet, to a service provider's or operator's system and from there on via a wireless closed network to the customer's terminal.

The customer is identified and authenticated by the service provider after which the transaction data can be processed at the customer's terminal so that the customer can be sure that the data, such as the sum total and the time of the transaction, are correct and that they are related to his transaction.

If the customer accepts the service or transaction data, such as e.g. a bill, sent to his terminal, payment can be made by entering at the terminal a code which in the case of a mobile phone may be e.g. the PIN code (Personal Identification Number) associated with the mobile phone. The seller receives indication of the payment made by the customer via information networks in his cash or billing system.

Let us next consider, as an example, electronic transaction in information networks such as the internet. In this example, the user of a service may be e.g. a private user having access to a terminal of an open network, such as a computer or workstation, and a terminal of a closed network, such as a mobile phone. In this example, electronic forms are fetched, using a browser, from a server of a service provider onto the workstation of the user of the service for some action, such as information retrieval, filling-in or signing. A completed form can be digitally signed using a wireless terminal independent of the workstation and physically separated therefrom, and sent in an open network to a recipient.

If the electronic form is to be digitally signed before sending it, the user of the service sends a signature request to the service provider. The signature request can be sent from the workstation or wireless terminal of the user of the service. After that, the service provider typically verifies the signature request and transfers it to the wireless terminal of the user of the service, having identified and authenticated the terminals in the open and closed networks. Signing can be done digitally by giving a code at the terminal of the user of the service in the closed network. The digital signature is transferred, through the service provider that serves as identifier and authenticator of the users of the service, to the workstation of the user of the service, where the user of the service can add it to the digitally signed form or carry out other appropriate actions.

The above-mentioned terminal of a customer, or user of a service, which terminal operates in a closed network, is typically a PDA, mobile phone or a similar system that can be used to accept a received request or verification e.g. by entering a certain code. In particular the terminal may be a mobile phone operating in a wireless network and equipped with a suitable SIM card. The terminal may additionally include a processor and a certain encryption key which may be stored e.g. in the SIM card of the device.

The above-mentioned terminal of the seller, or user of a service, which terminal operates in an open network, may be e.g. a computer or workstation, PDA, mobile phone, digital TV or a similar system equipped with suitable memory units, communications facilities and a processor and capable of sending and receiving a request, verification or service like those mentioned above.

In the examples mentioned above, electronic transactions in an information network are subject to certain basic requirements, such as identification and authentication of the different parties, indisputableness of the event and transaction and recordability of the time of occurrence thereof, securing of the confidentiality and integrity of information, verification of the authenticity of a document and its origins, and notary services such as a time stamp and archiving. In addition, it may be required that the information transferred is encrypted using certain encryption algorithms. Encryption and decryption of information can be advantageously performed e.g. using the terminal of the user of service in the closed network, an encryption key stored in the SIM card of the terminal, and a processor possibly included in the terminal.

Advantageous embodiments of the invention are below described a little more closely, referring to the accompanying drawings in which
- Fig. 1: is a flow diagram of an embodiment for accepting a verification associated with a service in accordance with the invention,
- Fig. 2: illustrates an arrangement according to the invention for paying for a product or service,
- Fig. 3: illustrates an arrangement according to the invention for digitally signing a form,
- Fig. 4: is a flow diagram of a method for paying for a product or service in accordance with the invention, and
- Fig. 5: is a flow diagram of a method for digitally signing a form in accordance with the invention.

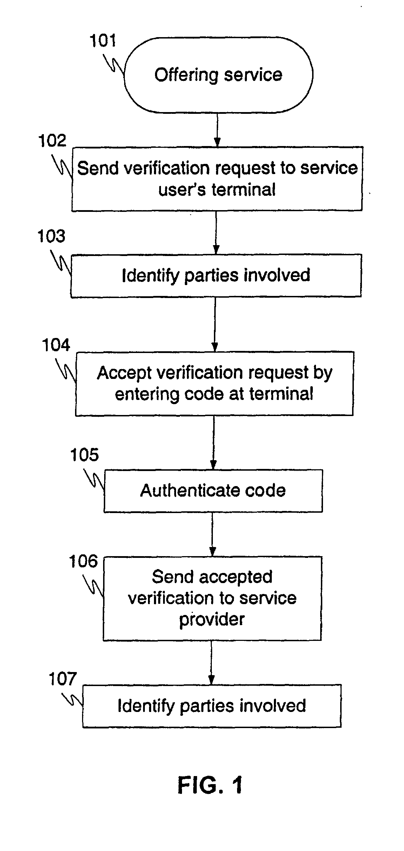

Fig. 1 is a flow diagram of an embodiment of the central idea of the invention for accepting a verification associated with a service offered. Typically the service offered is a commercial transaction or a purchase, but the service may also be the digital signing of an electronic form, registering to a service, or some other similar service where a user needs to be reliably identified and authenticated. In accordance with the idea of the invention it is also possible to reliably identify the both parties to a transaction, verify the authenticity and origins of the documents transferred, ensure the confidentiality and integrity of the information, the indisputableness of the event or transaction, register the time of occurrence of the event and archive the material.

In this example, the users of service are a seller with a terminal of an open network, and a customer with a terminal of a closed network. The seller may additionally be a service provider offering services in an open network.

A service may be offered 101 and used e.g. in a typical store environment, in which case the service user in the open network, i.e. the seller, may transfer the transaction data to the terminal of the service user in the closed network, i.e. the customer, via information networks. Alternatively, the service may be one that is offered in an information network, so-called online shopping, for example, in which case the transaction data are transferred automatically to the customer's terminal. If a customer uses a service requiring user identification, or verification of data related to the service by the customer, a verification request may be sent in step 102 to the customer, e.g. to his closed-network terminal, by means of the open and closed networks and service providers in these networks. A verification request may contain data related to the transaction or it can be used to verify the identity of the customer and thus possibly his rights concerning the service offered. In step 103 the sender and/or receiver of the verification request can be identified e.g. by service providers in the open or closed or both networks.

A request may be sent e.g. from a seller's open-network terminal, such as a computer, in which case the request is advantageously first sent to a service provider providing services in the open network, which service provider can identify and authenticate the party that sent the request. The open-network service provider can forward the request advantageously to a service provider of a closed network, e.g. a mobile network operator, which in turn can identify and authenticate the party receiving the request, i.e. the customer's terminal. After that the closed-network service provider can forward the request to the customer's terminal.

Having received a verification request the customer can check the information in the request and either accept or reject the request. If the customer decides to accept the request, the acceptance can be given in step 104 by entering a code at the closed-network terminal. The code is advantageously a PIN number of a terminal, but it may be some other user-specific code, too. The code is authenticated in step 105 using e.g. the SIM card in the terminal. In step 106 the accepted verification is sent to the seller. The verification is advantageously transferred e.g. via a service provider in the closed or open network or, alternatively, both, who can identify the customer or both parties in step 107 and send the verification further to the seller. Having received an accepting verification the seller may give the customer e.g. a right to use a service or product. A request or verification accepted by a customer by his terminal can be sent back to the seller via the same communications link that was used to send the request from the seller to the customer's terminal. In that case the identification and authentication of the customer and seller can be reliably done by service providers in the closed and open networks, for example.

Depending on the nature (official vs. unofficial) or importance of the information transferred, the information may also be transferred through a reliable third party (RTP) providing notary services in information networks. The RTP may be located at a certain point of the service chain between the parties to the service transaction. Notary services or functions of a RTP are not described or defined more closely in conjunction with this application.

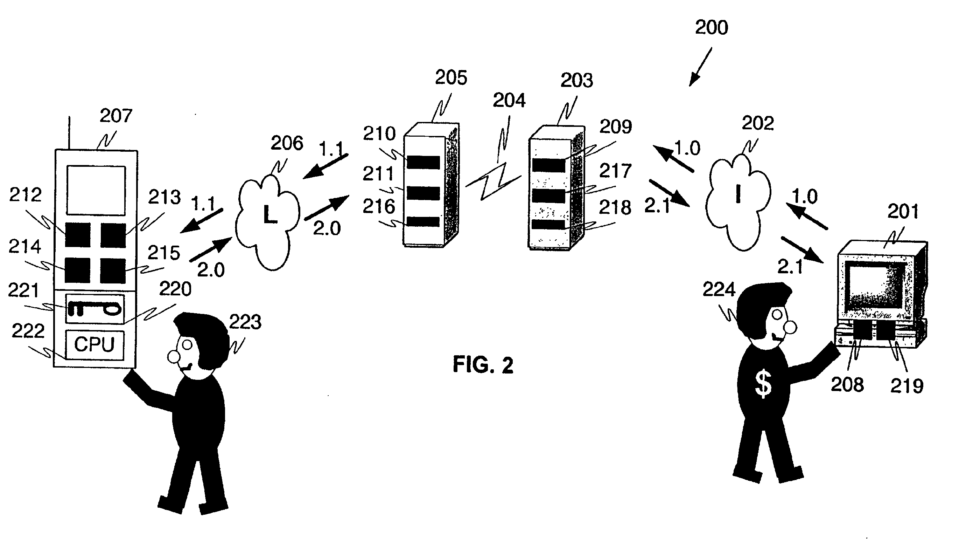

Fig. 2 illustrates an arrangement 200 according to an embodiment of the invention for accepting information related to a payment or other transaction or service at a customer's 223 terminal 207. In the method according to the embodiment, a seller 224 transfers the transaction data into his cash and billing system 201 from where the transaction data are sent via an open network 202, such as the internet (I), to a service provider's system 203 in step 1.0. The open network may alternatively be some other arrangement intended for information transfer. The transaction data may include information about e.g. the time, seller 224, product, buyer or customer 223, as well as an identifier to identify the customer 223. The identifier may be e.g. a customer code.

The open-network service provider 203 can identify the seller 224 or customer 223 after having received the transaction data from the seller's system, and forward 204 the data to the closed-network service provider 205 who sends the data further to the customer's 223 terminal 207 via the closed network 206 in step 1.1. Also the closed-network service provider 205 can at this stage identify the seller 224 and customer 223 and the latter's wireless terminal 207. Typically the service provider 205 is a wireless network operator, such as a mobile network operator, who transfers messages or information in wireless networks. The service provider 205 may also transfer information in the internet. The wireless network 206 may be a mobile communications network, for example.

Transaction data can be processed in the customer's 223 terminal 207 typically so that the customer can assure himself of the correctness of the data, such as the sum total, time of occurrence of the event, and that the data are related to his transaction. Acceptance of the transaction data, such as payment, can be accomplished on the customer's 223 terminal 207 by inputting e.g. a code such as the one mentioned above, at the terminal. When the code has been entered, the data related to the acceptance of the transaction can be sent via a closed network 206 in step 2.0 to a closed-network service provider 205 who forwards 204 the data to an open-network service provider 203. The seller 224 receives in his system 201 information about the payment made by the customer from a service provider 203 via an open network 202 in step 2.1.

In the transfer stage of the data related to the acceptance of a transaction both the closed-network service provider 205 and the open-network service provider 203 can identify the customer 223 or his terminal 207 and the seller 224 or his system 201. Moreover, the transaction-related data can be transferred by a reliable third party who can reliably identify the parties to the transaction.

Typically the seller's 224 cash and billing system 201 includes a means 208 for sending the transaction-related data to the open or closed-network service provider, and a means 219 for receiving the data related to the acceptance of the transaction. The open-network service provider's system 203 usually includes a means 209 for identifying the sender of the data related to the transaction, and a means 217 for identifying the receiver of the data related to the acceptance of the transaction, and a means 218 for transferring the data related to the acceptance of the transaction to the seller's 224 system 201.

The closed-network service provider's system 205 typically includes a means 210 for identifying the receiver of the data related to the transaction, a means 211 for transferring the data related to the transaction to the customer's terminal 207, and a means 216 for identifying the sender of the data related to the acceptance of the transaction. The customer's 223 terminal 207 usually includes a means 212 for receiving the data related to the transaction, a means 213 for accepting the data related to the transaction, a means 214 for identifying a code given at the terminal 213, a means 215 for transferring the transaction-related data to the closed-network service provider 205 or open-network service provider 203, a processor 222 and SIM card 220 which advantageously contains an encryption key 221 for encrypting and decrypting data.

In addition, the systems of the closed-network service provider 205 and open-network service provider 203 have means for communicating with each other e.g. by means of a data transfer system 204. Furthermore, the service providers' 203, 205 systems may include identical means so that data transfer between the seller's 224 terminal 201 and customer's 223 terminal 207 can be accomplished using the closed-network service provider solely or, alternatively, the open-network service provider solely.

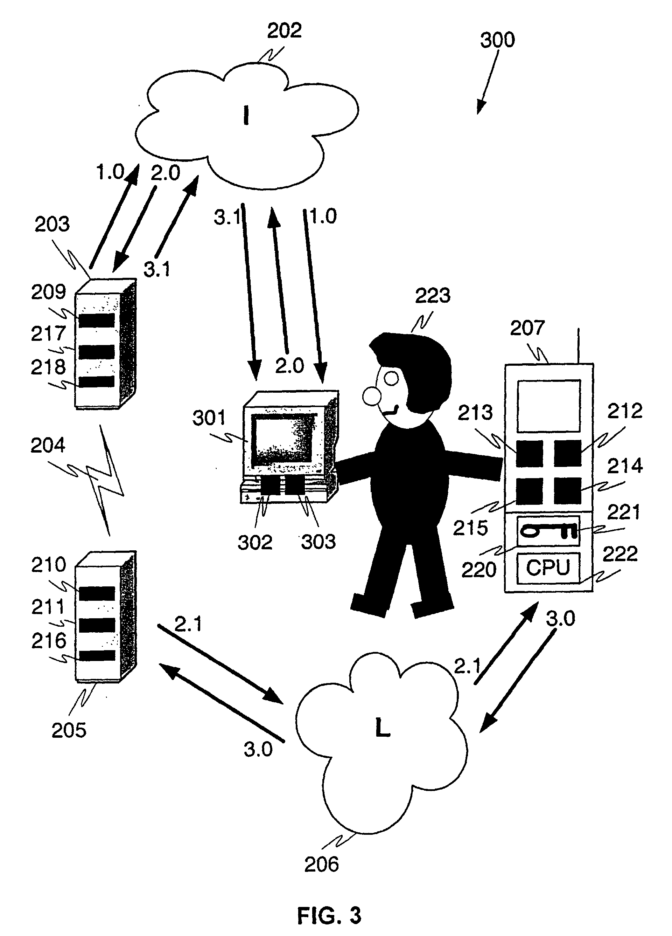

Fig. 3 illustrates an arrangement 300 according to the invention for utilizing an electronic transaction service offered in an open network 202, in which arrangement electronic online forms are fetched from a service provider's server 203 to a service user's 223 terminal 301, such as a computer or workstation, via an open information network 202, such as the internet (I) in step 1.0. Online forms may be fetched onto the terminal 301 e.g. for actions such as data retrieval, filling or digital signing. Forms may be fetched using e.g. a browser application at the terminal 301 or they may be provided by some other means such as e.g. on disk, by e-mail, or using a similar method intended for data transfer. Furthermore, a service user 223 may produce the form himself at his terminal 301. The service provider 203 according to the example is typically a company, organization, official body or an administrative organ, and especially the service provider may be an internet operator that produces information network services and transfers data e.g. between a service user's 223 open-network terminal 301, such as a workstation or computer, and a service user's 223 closed-network terminal 207, such as a mobile phone.

The service provider 203 typically receives an acknowledgment on the reception of a form from a service user 223 who can e.g. edit, sign, send or archive the electronic form or document. If the service user 223 wants to sign the electronic form, he may send a signature request or message from his terminal 301 to a service provider 203 via an open network 202 in step 2.0. The signature request may also be sent from the service user's 223 closed-network terminal 207. The open-network service provider 203 may at this stage identify the service user's 223 terminal 301 (or 207) and forward 204 the signature request to the closed-network service provider 205 who may further forward the request e.g. to the service user's wireless terminal 207 via a closed wireless network 206 in step 2.1. Also the closed-network service provider 205 may at this stage identify the service user and his wireless terminal 207.

If he wants, the service user 223 may digitally sign the message he has received at his terminal 207, using e.g. a closed-network terminal and a code. The code may be like those described above, for example. When the code has been given, the message can be signed and sent via a closed wireless network 206 to a closed-network service provider 205 in step 3.0. The message can be encrypted e.g. by means of an encryption key 221 stored on the SIM card 220 in the terminal and a processor 222 in the terminal. The service provider 205 can identify the service user's 223 closed-network terminal 207 and forward 204 the signed message to the open-network service provider 203 who further forwards the message to the service user's 223 open-network terminal 301 via an open network 202 in step 3.1.

The service user's 223 terminal 301 may be e.g. a workstation or computer, PDA, mobile phone, digital TV or a similar system equipped with suitable memory units, communications facilities and a processor and capable of receiving an online form like that mentioned above and sending a signature request and receiving a signed message. The service user's terminal 301 typically includes a means 302 for fetching, receiving and processing a form and a means 303 for sending a signature request and receiving a signature.

The service user's 223 closed-network terminal 207 is typically a PDA, mobile phone or a similar system that can be used to accept a received signature request e.g. by entering a certain identifier or code at the terminal. In particular, the terminal 207 may be a mobile phone operating in a wireless network, equipped with a suitable SIM card 220, an encryption key 221 stored on the SIM card, and possibly a processor 222. A processor enables e.g. the use of an electronic signature and execution of the computation required for the encryption in the mobile phone.

In addition, the systems of the open-network and closed-network service providers may include identical means for identifying the different parties and transferring the data, so that data transfer between the service user's 223 open-network terminal 301 and closed-network terminal 207 can be accomplished using the open-network service provider solely or, alternatively, the closed-network service provider solely. Identification of the parties to the transaction by the service providers is advantageously performed always when transferring data related to a transaction. Alternatively, the data can be transferred by a reliable third party in which case the verification of data integrity and other such measures related to information security, verification and reliable identification of the parties can be performed by said reliable third party.

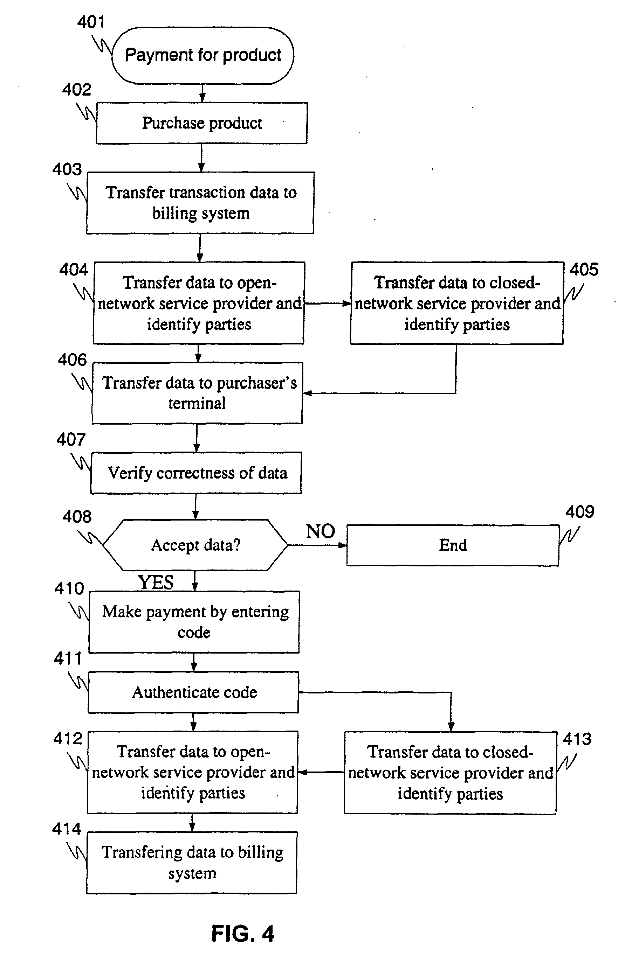

Fig. 4 is a flow diagram of a method according to the invention for paying 401 for a product or service. In step 402 a customer purchases a product and in step 403 the seller transfers the customer's transaction data into his cash and billing system which is connected e.g. to a an open information network, such as the internet. In step 404 the transaction data are transferred from the seller's billing system typically via the internet to the system of an open-network service provider. The service provider may be e.g. a data network operator offering data network or internet services, with whom the seller possibly has made a service contract. The open-network service provider may at this stage identify the seller and forward the transaction data to a closed-network service provider in step 405. The closed-network service provider may be e.g. a wireless network operator which in turn may identify the customer's terminal in a wireless network and forward the transaction data to the terminal in step 406. Alternatively, the open-network service provider may identify the customer and forward the transaction data directly to the customer's terminal in step 406.

As the customer has received the transaction data on his closed-network terminal, he can assure himself of the correctness of the transaction data in step 407. The transaction data may also be encrypted e.g. using an encryption algorithm, in which case step 407 also includes decryption and displaying of the transaction data in plain language. In step 408 the customer can choose whether he accepts the transaction data or not. If the customer does not accept the transaction data, the payment for the product or service is canceled in step 409. If the customer accepts the data, payment is accomplished in step 410 by entering e.g. a code like the one described above at the closed-network terminal.

In step 411 the code entered by the customer is authenticated e.g. by comparing the code to the data in the SIM card. If the code is correct, information about the payment is sent in step 413 to the closed-network service provider. The payment information may also be sent directly to the open-network service provider in step 412. The information transferred may also be encrypted before the transfer, using e.g. an encryption key stored in the SIM card of the closed-network terminal and a processor in the terminal, if there is one.

The closed-network service provider may identify the closed-network terminal and the user of the terminal in conjunction with step 413 and forward the information to the system of the open-network service provider in step 412. The open-network service provider may identify the seller associated with the transaction in conjunction with step 412 and forward the payment information to the seller's billing system in step 414. Alternatively, the information transfer between the parties to the transaction can be accomplished solely by the service provider of the closed network or solely by the service provider of the open network, in which case both service providers can identify the both parties to the transaction.

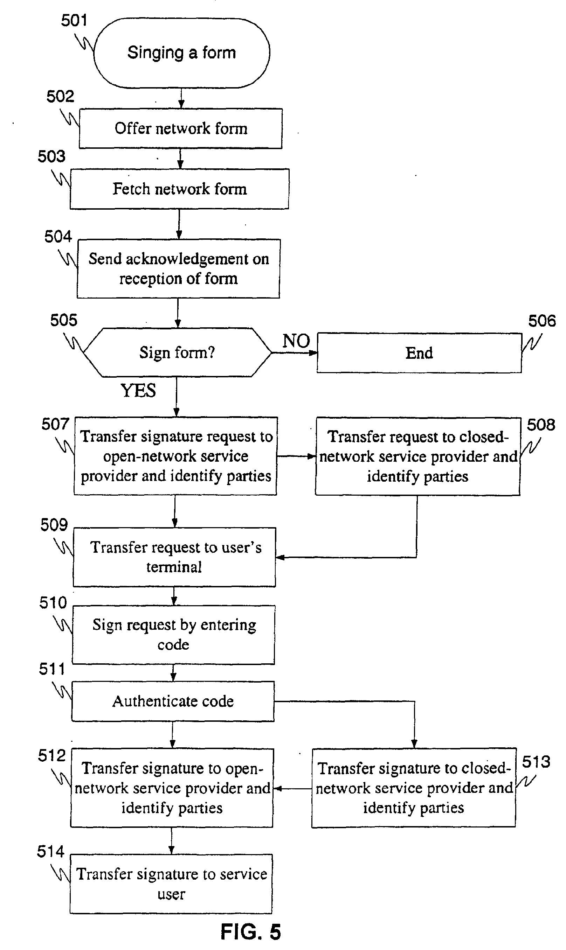

Fig. 5 is a flow diagram of a method according to the invention for digitally signing 501 a form. In step 502, an electronic online form may be offered e.g. in an information network from where it can be fetched in step 503 to a service user's open-network terminal, such as e.g. a computer or other similar device for further action. The form may also be delivered in other ways or it may be generated at the service user's open-network terminal. If the form is delivered from a service provider's system to a service user's open-network terminal e.g. via an information network, an acknowledgment can be sent in step 504 to the service provider indicating that the form has been received and that the reception was successful.

In addition, the parties may be identified in steps 502 and 503, if required by the online form fetched. Such a network form may be e.g. a form delivered from Internal Revenue or other such place, provided with the service user's data, and, for reasons of data confidentiality, delivered only to the service user in question. In such a case, the service user may be sent a signature request or verification request at his terminal in accordance with the embodiments described in this patent application, thus enabling the verification of the identity of the service user and his right to fetch said form via an information network.

A service user may perform various actions on a form, such as edit, send, archive or sign it. In step 505 it can be decided whether the form will be signed or not. In step 506 the method according to the embodiment is ended if the form is to be left unsigned. But if the form is to be signed, a signature request can be sent to an open-network service provider in step 507. In step 507 the open-network service provider may also identify the parties involved in the signing procedure. A signature request may be sent using the service user's open-network terminal or, alternatively, also the service user's closed-network terminal. The open-network service provider can forward the signature request to a closed-network service provider in step 508 so that the closed-network service provider can identify the service user's closed-network terminal and forward the request to the terminal in step 509. Alternatively, the open-network service provider may identify the service user's closed-network terminal and forward the signature request directly to the service user's closed-network terminal in step 509.

Having received the signature request at his closed-network terminal the service user can sign the request by entering a code at his terminal in step 510. The code may be e.g. like the code mentioned above. In step 511 the code entered by the user is authenticated. If necessary, the signature can be encrypted when the code has been entered, e.g. by means of an encryption key stored in the SIM card of the terminal and a processor in the terminal, if there is one. The signature can be sent to the closed-network service provider 205 in step 513 at which stage the service provider can identify the closed-network terminal of the service user and forward the signature to the open-network service provider 203 in step 512. Alternatively, the signature can be sent from the user's closed-network terminal 207 directly to the open-network service provider 203 in step 512 in which case the open-network service provider can identify the user's closed-network terminal 207. The open-network service provider can typically also identify the service user's open-network terminal 301 and forward the signature to the terminal 301 in step 514.

Above it was described only a few embodiments of the arrangement according to the invention. Obviously the principle according to the invention can be varied within the scope defined by the claims e.g. as regards implementation details and fields of application. In particular, the terminals used may be systems of any type with which the idea according to the invention can be used or applied. Moreover, the methods and systems of the service providers in the open network and closed network may in some cases be identical, in which case e.g. the fetching of a form or a signature request can be accomplished or transferred by either of the service providers.

## Claims

1. A method (101) for offering a service in an information network, **characterized in that** data related to a transaction are transferred (102) in an open network, said data are accepted (104) and the acceptor of the data is identified (107) through authentication performed in a closed network.

2. A method according to claim 1, **characterized in that** said acceptance of data comprises steps in which
- accepting the data related to said transaction is performed (104) by entering a code at a terminal (207) of a closed network,
- said code entered at a terminal is identified and authenticated (105), and
- said data related to the acceptance of a transaction are transferred (412, 413) to a service provider (203, 205) via a closed network.

3. A method according to claim 1, **characterized in that** said transaction is a commercial transaction (401).

4. A method according to claim 1, **characterized in that** said transaction is the digital signing (501) of a form.

5. A method according to claim 1, **characterized in that** the parties associated with the transfer of data are identified by a service provider (203, 205).

6. A method according to claim 1, **characterized in that** the parties associated with the transfer of data are identified by a reliable third party.

7. A method according to claim 1, **characterized in that** said code entered at a terminal (207) is a PIN code that can be authenticated by a SIM card (220).

8. A method according to claim 1, **characterized in that** the decryption of data related to said transaction is performed using a service user's terminal (207).

9. A method according to claim 1, **characterized in that** the data related to the acceptance of said transaction are encrypted using a service user's terminal (207).

10. A method according to claim 1, **characterized in that** said transaction data are sent from a service user's system (201, 301) to a service provider's (203, 205) system via an open information network (202).

11. A method according to claim 1, **characterized in that** the data related to the acceptance of said transaction are sent to a service provider's (203, 205) system via a closed network (206).

12. An arrangement (200, 300) for offering a service in an information network, **characterized in that** the arrangement comprises an open (202) and a closed (206) information network, a means (208, 303) for transferring data related to a transaction in the open network, a means (213) for accepting said data, and a means (216) for identifying the acceptor of the data through authentication performed in the closed network.

13. An arrangement according to claim 12, **characterized in that** said acceptance of data further involves
- a means (213) for accepting the data related to said transaction by entering a code at a terminal (207) of a closed network,
- a means (214) for identifying and authenticating said code entered at a terminal, and
- a means (215) for transferring said data related to the acceptance of a transaction to a service provider (203, 205) via a closed network (206).

14. An arrangement according to claim 12, **characterized in that** said closed network (206) is a mobile telephone network.

15. An arrangement according to claim 12, **characterized in that** said open network (202) is the internet.

16. An arrangement according to claim 13, **characterized in that** said terminal (207) of a closed network is a wireless terminal.

17. An arrangement according to claim 16, **characterized in that** said terminal (207) has a SIM card (220).

18. An arrangement according to claim 16, **characterized in that** an encryption key (221) is stored on the SIM card (220) of said terminal (207).

19. An arrangement according to claim 16, **characterized in that** said terminal (207) has a processor (222) for encrypting and decrypting data.
